# EUROPÄISCHE PATENTSCHRIFT

(11) **EP 3 835 630 B1**
(45) Veröffentlichungstag und Bekanntmachung des Hinweises auf die Patenterteilung: **01.01.2025**
(21) Anmeldenummer: 20205444.1
(22) Anmeldetag: 03.11.2020
(51) Int. Cl.: F16J 15/34

(54) **GLEITRINGDICHTUNGSANORDNUNG MIT SENSOR**
SLIDE RING SEAL ARRANGEMENT WITH SENSOR
ENSEMBLE JOINT À BAGUE DE GLISSEMENT POURVU DE CAPTEUR

(30) Priorität: 12.12.2019 DE 102019219416
(43) Veröffentlichungstag der Anmeldung: 16.06.2021
(73) Patentinhaber: EagleBurgmann Germany GmbH & Co. KG, 82515 Wolfratshausen (DE)
(72) Erfinder: LANG, Klaus, 82547 Eurasburg (DE)
(74) Vertreter: Hoefer & Partner Patentanwälte mbB

(56) Entgegenhaltungen:
- DE-A1- 102013 220 429
- US-B1- 6 360 610

## Beschreibung

Die vorliegende Erfindung betrifft eine Gleitringdichtungsanordnung mit einem Sensor und einer kabellosen Übertragungsvorrichtung zur kabellosen Übertragung von Informationen und/oder Signalen und/oder Energie.

Gleitringdichtungsanordnungen sind aus dem Stand der Technik in unterschiedlichen Ausgestaltungen bekannt. Um möglichst frühzeitig einen möglichen Ausfall einer Gleitringdichtungsanordnung zu erkennen, werden unterschiedliche physikalische Werte im Bereich der Gleitringdichtung erfasst und überwacht. Da Gleitringdichtungsanordnungen häufig auch Medien mit sehr hohen Temperaturen über 200°C oder sehr aggressive Medien abdichten müssen, sind an die verwendeten Sensoren zur Erfassung der physikalischen Werte höchste Anforderungen zu stellen. Weiterhin ist eine Kabelverbindung, welche den Sensor mit einer Auswertungseinheit oder dgl. verbindet, ebenfalls hohen Belastungen ausgesetzt. Insbesondere führen Gleitringe der Gleitringdichtungsanordnung im Betrieb zum Teil Verschiebewege von mehreren Millimetern aus, was für die Kabelverbindungen höchste Belastungen bedeutet. Auch muss beispielsweise bei einer Wartung eine derartige Kabelverbindung gelöst werden und nach erfolgter Wartung wieder sicher verbunden werden. Die DE 10 2013 220 429 A1 zeigt eine Gleitringdichtungsanordnung gemäß dem Oberbegriff des Anspruchs 1. Weiter zeigt die US 6,360,610 B1 eine Gleitringdichtungsanordnung, gemäß der Präambel von Anspruch 1, welche eine Dichtspaltüberwachung mittels Ultraschall ausführt.

Es ist daher Aufgabe der vorliegenden Erfindung, eine Gleitringdichtungsanordnung bereitzustellen, welche eine vereinfachte Möglichkeit einer Erfassung von physikalischen Werten im Bereich der Gleitringdichtungsanordnung ermöglicht.

Diese Aufgabe wird durch eine Gleitringdichtungsanordnung mit den Merkmalen des Anspruchs 1 gelöst, die Unteransprüche zeigen bevorzugte Weiterbildungen der Erfindung.

Die Gleitringdichtungsanordnung mit den Merkmalen des Anspruchs 1 weist hierbei den Vorteil auf, dass eine kabellose Übertragung von erfassten physikalischen Werten in Form von Signalen möglich ist. Insbesondere kann ein Sensor dabei auch an einem rotierenden Gleitring angeordnet werden, was bei einer kabelgebundenen Verbindung des Sensors nicht möglich ist. Erfindungsgemäß umfasst die Gleitringdichtungsanordnung wenigstens eine Gleitringdichtung mit einem rotierenden und einem stationären Gleitring, welche zwischen sich einen Dichtspalt definieren. Ferner ist ein Sensor zur Erfassung wenigstens eines physikalischen Wertes vorgesehen, wobei der Sensor an einem der Gleitringe angeordnet ist. Der Sensor ist dabei direkt am Gleitring angeordnet. Eine kabellose Übertragungsvorrichtung ist vorgesehen, welche eine erste Sender-Empfänger-Vorrichtung und eine zweite Sender-Empfänger-Vorrichtung umfasst. Die erste Sender-Empfänger-Vorrichtung ist am Sensor angeordnet und die zweite Sender-Empfänger-Vorrichtung ist an einem stationären Bauteil, beispielsweise einem Gehäuse der Gleitringdichtungsanordnung, angeordnet. Eine Übertragung von aufgenommenen Werten zwischen der ersten und zweiten Sender-Empfänger-Vorrichtung erfolgt dabei kabellos. Somit ist es möglich, dass ein Sensor ohne die sonst verwendeten Kabel mit einer Auswerteeinheit oder dgl. verbunden ist. Insbesondere kann ein Sensor auch problemlos an einem rotierenden Gleitring und/oder einem mit dem rotierenden Gleitring verbundenen Bauteil, z.B. einem Gleitringträger, verbunden werden.

Die kabellose Übertragungsvorrichtung ist ferner eingerichtet, auch elektrische Energie an den Sensor zu übertragen. Dadurch muss der Sensor keine eigene Energieversorgung aufweisen, sondern kann durch eine kabellose Energieübertragung, mittels Induktion mit Energie versorgt werden.

Der Sensor umfasst weiter eine Auswertungseinheit, welche unmittelbar am Sensor angeordnet ist. Dadurch ist es insbesondere möglich, dass die zu übertragenden Datenmengen signifikant reduziert werden können, da eine Auswertung schon direkt am Sensor erfolgt. Hierdurch ist für eine Übertragung der Daten somit nur eine geringe Energiemenge notwendig.

Ferner sind die physikalischen Werte, die der Sensor aufnimmt, ein Körperschall des rotierenden Gleitrings und/oder des stationären Gleitrings und eine Spalthöhe des Dichtspalts, d.h. ein Abstand zwischen den Gleitflächen des rotierenden und stationären Gleitrings.

Um eine möglichst große und vielseitige Anwendung zu ermöglichen, ist der Sensor vorzugsweise ein Dünnschicht-Sensor. Dünnschicht-Sensoren weisen nur eine geringe Bauhöhe auf und können einfach und sicher, beispielsweise mittels Kleben, an Bauteilen fixiert werden.

Besonders bevorzugt sind der Sensor, die erste Sender-Empfänger-Vorrichtung und die Auswertungseinheit ein kompaktes Bauteil.

Gemäß einer weiteren bevorzugten Ausgestaltung der Erfindung ist der Sensor an der Gleitringdichtung an einem produktabgewandten Bereich des oder der Gleitringe angeordnet. Dadurch kann ein gewisser Schutz des Sensors garantiert werden, da der Sensor nicht unmittelbar mit dem abzudichtenden Produkt, welches sehr heiß sei kann oder sehr aggressiv sein kann, in Kontakt kommt.

Weiter bevorzugt ist der Sensor in einem mit dem Gleitring verbundenen Sensoraufnahmeelement angeordnet. Das Sensoraufnahmeelement kann beispielsweise ein O-Ring oder eine Nebendichtung der Gleitringdichtung sein oder auch ein Gleitringträger oder dgl.

Um eine Vielzahl von unterschiedlichen physikalischen Werten aufzunehmen, sind an einem der Gleitringe der Gleitringdichtung vorzugsweise mehrere Sensoren angeordnet und/oder an dem rotierenden und dem stationären Gleitring sind ein oder mehrere Sensoren angeordnet. Somit können physikalische Werte sowohl vom rotierenden als auch vom stationären Gleitring erfasst werden. Besonders bevorzugt ist ein Sensor oder alle Sensoren dabei direkt am Gleitring angeordnet.

Die Gleitringdichtungsanordnung umfasst vorzugsweise Sensoren, welche die nachfolgenden physikalischen Werte erfassen können:
- Temperatur des rotierenden und/oder stationären Gleitrings und/oder eines Fluids im Dichtspalt zwischen den Gleitringen, und/oder
- Beschleunigung des rotierenden und/oder stationären Gleitrings in Axialrichtung des Gleitrings und/oder Radialrichtung des Gleitrings, und/oder
- Oberflächenwellenausbreitung am rotierenden und/oder stationären Gleitring, und/oder
- Dehnung und/oder Spannung des rotierenden und/oder stationären Gleitrings.

Der Sensor der Gleitringdichtungsanordnung weist vorzugsweise eine torodiale Form auf und ist insbesondere als Hohlzylinder oder als Torus ausgebildet. Hierdurch ergibt sich durch die Anordnung des Sensors am Gleitring keine Unwucht, so dass eine Funktion der Gleitringdichtungsanordnung durch den Sensor nicht behindert wird.

Die Gleitringdichtungsanordnung umfasst ferner bevorzugt eine Steuereinheit, welche eingerichtet ist, basierend auf den erfassten physikalischen Werten eine Ausfallwahrscheinlichkeit der Gleitringdichtungsanordnung zu bestimmen. In Abhängigkeit der bestimmten Ausfallwahrscheinlichkeit kann dann beispielsweise eine Wartung der Gleitringdichtungsanordnung angeordnet werden oder gegebenenfalls ein Austausch von Bauteilen der Gleitringdichtungsanordnung vorgenommen werden.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Schnittansicht einer Gleitringdichtungsanordnung gemäß einem ersten Ausführungsbeispiel der Erfindung,
- Fig. 2: eine schematische Schnittansicht einer Gleitringdichtungsanordnung gemäß einem zweiten Ausführungsbeispiel der Erfindung,
- Fig. 3: eine schematische Schnittansicht einer Gleitringdichtungsanordnung gemäß einem dritten Ausführungsbeispiel der Erfindung, und
- Fig. 4: eine schematische Draufsicht eines rotierenden Gleitrings einer Gleitringdichtungsanordnung gemäß einem vierten Ausführungsbeispiel der Erfindung.

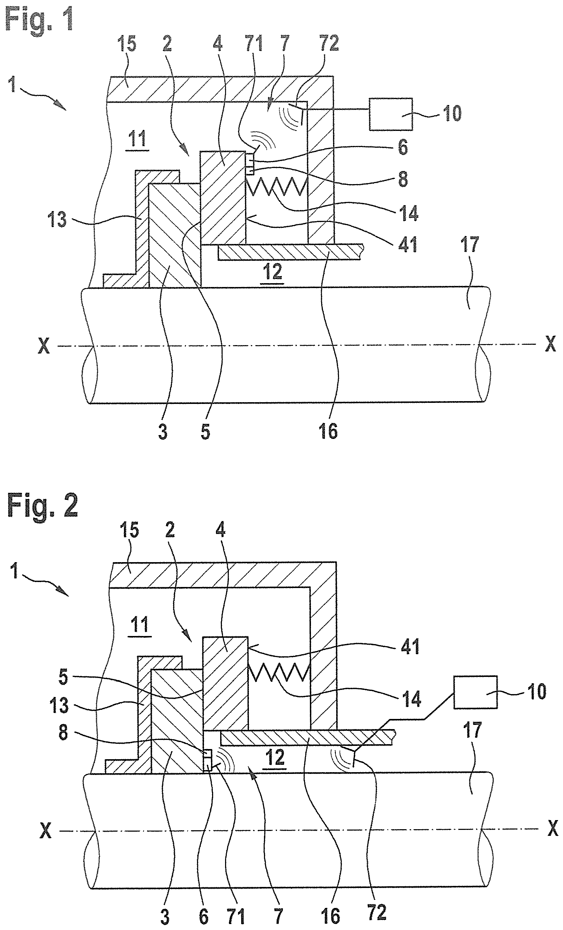

Nachfolgend wird unter Bezugnahme auf Fig. 1 eine Gleitringdichtungsanordnung 1 gemäß einem ersten Ausführungsbeispiel der Erfindung im Detail beschrieben.

Wie aus Fig. 1 ersichtlich ist, umfasst die Gleitringdichtungsanordnung 1 eine Gleitringdichtung 2 mit einem rotierenden Gleitring 3 und einem stationären Gleitring 4. Zwischen dem rotierenden Gleitring 3 und dem stationären Gleitring 4 ist ein Dichtspalt 5 definiert.

Die Gleitringdichtung 2 dichtet dabei einen Produktbereich 11 von einem Atmosphärenbereich 12 ab. Der rotierende Gleitring 3 ist mittels eines Gleitringträgers 13 an einer Welle 17 mit einer Mittelachse X-X fixiert. Der stationäre Gleitring 4 ist auf einer Wellenhülse 16, welche mit einem Gehäuse 15 fest verbunden ist, angeordnet.

Ein Vorspannelement 14, welches in diesem Ausführungsbeispiel eine Vielzahl von Schraubenfedern umfasst, die entlang des Umfangs angeordnet sind, spannt den stationären Gleitring 4 gegen den rotierenden Gleitring 3 vor.

Die Gleitringdichtungsanordnung 1 umfasst ferner einen Sensor 6, welcher am stationären Gleitring 4 an einer Rückseite 41 des Gleitrings angeordnet ist. Der Sensor 6 erfasst wenigstens einen physikalischen Wert, beispielsweise Temperatur und/oder Druck und/oder Körperschall oder dgl.

Unmittelbar am Sensor 6 ist ferner eine Auswertungseinheit 8 angeordnet. Die Auswertungseinheit 8 wertet die vom Sensor 6 aufgenommenen physikalischen Werte aus und ermöglicht eine Reduzierung eines zu übertragenden Datenvolumens.

Ferner umfasst die Gleitringdichtungsanordnung 1 eine kabellose Übertragungsvorrichtung 7. Die Übertragungsvorrichtung 7 umfasst eine erste Sender-Empfänger-Vorrichtung 71 und eine zweite Sender-Empfänger-Vorrichtung 72. Wie in Fig. 1 angedeutet, können dabei die durch die Auswerteeinheit erzeugten Signale kabellos von der Sender-Empfänger-Vorrichtung 71 auf die zweite Sender-Empfänger-Vorrichtung 72 übertragen werden. Die zweite Sender-Empfänger-Vorrichtung 72 ist mit einer Steuereinheit 10 verbunden. Diese Verbindung kann ebenfalls kabellos oder, wie in diesem Ausführungsbeispiel gezeigt, kostengünstig über Kabel ermöglicht werden. Es sei angemerkt, dass es auch möglich ist, dass die Steuereinheit 10 direkt an der zweiten Sender-Empfänger-Vorrichtung 72 angeordnet ist, so dass eine aufwendige Verbindung zwischen den beiden Bauteilen entfallen kann.

Die Steuereinheit 10 ist eingerichtet, basierend auf den übermittelten Daten eine Ausfallwahrscheinlichkeit der Gleitringdichtung 2 zu bestimmen. Beispielsweise können anhand der erfassten physikalischen Werte durch den Sensor 6 Rückschlüsse auf einen Verschleiß der Gleitringe gezogen werden.

Wie aus Fig. 1 ersichtlich ist, ist der Sensor 6 in diesem Ausführungsbeispiel im Produktbereich 11 angeordnet. Das Produkt im Produktbereich 11 kann dabei eine sehr hohe Temperatur, insbesondere höher als 200°C, aufweisen und/oder auch eine aggressives Medium sein. Daher ist der Sensor 6 in Abhängigkeit des abzudichtenden Mediums zu schützen. In diesem Ausführungsbeispiel bilden der Sensor 6 und die Auswertungseinheit 8 eine gemeinsame Baugruppe, welche beispielsweise ein gemeinsames Gehäuse aufweisen kann. Die erste Sender-Empfänger-Vorrichtung 71 ist dabei eine Antenne, welche an der Außenseite des gemeinsamen Gehäuses angeordnet ist.

Es sei ferner angemerkt, dass die kabellose Übertragungsvorrichtung 7 auch in der Lage ist, ausgehend von der zweiten Sender-Empfänger-Vorrichtung 72 Energie für den Sensor 6 über die erste Sender-Empfänger-Vorrichtung 71 zu übertragen. Dadurch muss der Sensor 6 keinen eigenen Energiespeicher aufweisen, sondern kann beispielsweise durch Induktion mit elektrischer Energie versorgt werden. Alternativ oder zusätzlich kann der Sensor 6 auch einen eigenen Energiespeicher aufweisen.

Somit kann durch die kabellose Übertragungsvorrichtung 7 eine einfach aufgebaute und sichere Überwachung der Gleitringdichtung 2 ermöglicht werden. Die erfassten Daten werden in der Auswertungseinheit 8 ausgewertet und dann kabellos zur zweiten Sender-Empfänger-Vorrichtung 72 übertragen, in welcher die Daten weiter ausgewertet werden können oder entsprechende Maßnahmen, beispielsweise eine Wartungsmeldung zur Wartung der Gleitringdichtung ausgeben. Durch die am Sensor 6 angeordnete Auswertungseinheit 8 können die Rohdatenmengen, welche vom Sensor 6 aufgenommen wurden, signifikant reduziert werden, so dass eine schnelle und energiesparende Datenübertragung zwischen der ersten und zweiten Sender-Empfänger-Vorrichtung 71, 72 möglich ist. Der Sensor 6 kann beispielsweise mittels Kleben mit dem stationären Gleitring 4 verbunden werden. Es sei jedoch angemerkt, dass auch andere alternative Verbindungstechniken zur Fixierung des Sensors 6 am stationären Gleitring 4 möglich sind.

Eine Energieübertragung zwischen der zweiten Sender-Empfänger-Vorrichtung 72 und der ersten Sender-Empfänger-Vorrichtung 71 kann beispielsweise über Spulen erfolgen, welche auch in gedruckter Form vorliegen können. Eine Energieübertragung erfolgt vorzugsweise in einem niedrigen Frequenzbereich ≤ 1 kHz. Da die Übertragungsstrecke von der Rückseite 41 des stationären Gleitrings 4 zum Gehäuse 15 nur kurz ist und auch nicht durch andere Bauteile, insbesondere metallische Bauteile, gestört ist, kann ein sehr kompakter Aufbau ermöglicht werden.

Fig. 2 zeigt eine Gleitringdichtungsanordnung 1 gemäß einem zweiten Ausführungsbeispiel der Erfindung. Gleiche bzw. funktional gleiche Teile sind mit den gleichen Bezugszeichen wie im ersten Ausführungsbeispiel bezeichnet. Im Unterschied zum ersten Ausführungsbeispiel ist beim zweiten Ausführungsbeispiel die kabellose Übertragungsvorrichtung 7 und der Sensor 6 unterschiedlich angeordnet. Beim zweiten Ausführungsbeispiel ist der Sensor 6 am rotierenden Gleitring 3 angeordnet. Dabei ist der Sensor 6 im Atmosphärenbereich 12 angeordnet, so dass der Sensor 6 nicht dem abzudichtenden Medium im Produktbereich 11 ausgesetzt ist. Dadurch kann gegebenenfalls eine Schutzeinrichtung, um den Sensor 6 gegenüber einem aggressiven Medium und/oder hohen Temperaturen oder dgl. zu schützen, entfallen. Am Sensor 6 ist wiederum eine Auswertungseinheit 8 angeordnet, um eine zu übertragende Datenmenge signifikant zu reduzieren. Die zweite Sender-Empfänger-Vorrichtung 72 ist in diesem Ausführungsbeispiel an der Wellenhülse 16 angeordnet. Dadurch kann wieder eine freie kabellose Übertragungsstrecke zwischen der ersten und zweiten Sender-Empfänger-Vorrichtung 71, 72 bereitgestellt werden. Ansonsten entspricht dieses Ausführungsbeispiel dem vorhergehenden Ausführungsbeispiel, so dass auf die dort gegebene Beschreibung verwiesen werden kann.

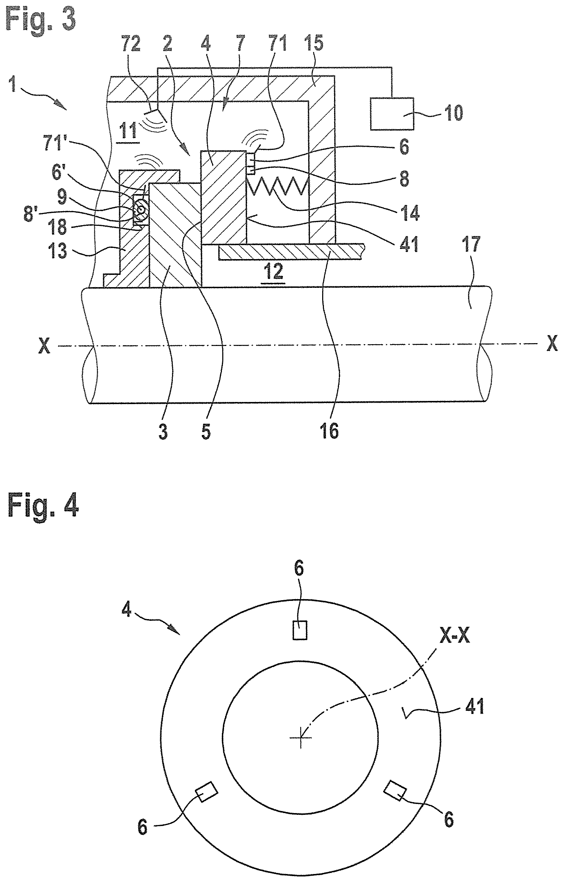

Fig. 3 zeigt eine Gleitringdichtungsanordnung 1 gemäß einem dritten Ausführungsbeispiel der Erfindung. Gleiche bzw. funktional gleiche Teile sind wiederum mit den gleichen Bezugszeichen wie in den vorhergehenden Ausführungsbeispielen bezeichnet.

Im Unterschied zu den vorhergehenden Ausführungsbeispielen sind beim dritten Ausführungsbeispiel Sensoren 6 sowohl am stationären Gleitring 4 als auch am rotierenden Gleitring 3 angeordnet. Ein Sensor 6 ist, wie im ersten Ausführungsbeispiel, an einer Rückseite 41 des stationären Gleitrings 4 angeordnet. Ein weiterer Sensor 6' ist in diesem Ausführungsbeispiel in ein Sensoraufnahmeelement 9 integriert. Das Sensoraufnahmeelement 9 ist in diesem Ausführungsbeispiel ein O-Ring, welcher in einer Ausnehmung 18 in einem Gleitringträger 13 angeordnet ist. Beide Sensoren 6 weisen jeweils erste Sender-Empfänger-Vorrichtungen 71, 71' auf, welche Daten kabellos an eine gemeinsame zweite Sender-Empfänger-Vorrichtung 72 übertragen können. Die zweite Sender-Empfänger-Vorrichtung 72 ist mit einer Steuereinheit 10 verbunden. An beiden Sensoren 6 sind wiederum direkt Auswertungseinheiten 8, 8' angeordnet, um die zu übertragenden Datenmengen zu reduzieren.

Der im O-Ring angeordnete Sensor 6 weist eine torodiale Form auf, so dass eine Unwucht, welche nur durch einen punktuell angeordneten Sensor am rotierenden Teil der Gleitringdichtung 2 auftreten könnte, vermieden werden kann. Eine Positionierung des O-Rings ist dabei derart, dass eine kabellose Datenübertragung problemlos durch das Material des O-Rings und des Gleitringträgers 13 möglich ist. Der Sensor 6 ist vollständig vom O-Ring umschlossen. Die kabellose Übertragungsvorrichtung 7 ist dabei ebenfalls in der Lage, sowohl Signale als auch Energie zu übertragen. Ansonsten entspricht dieses Ausführungsbeispiel dem vorhergehenden Ausführungsbeispiel, so dass auf die dort gegebene Beschreibung verwiesen werden kann.

Fig. 4 zeigt einen stationären Gleitring 4 einer Gleitringdichtungsanordnung 1 gemäß einem vierten Ausführungsbeispiel der Erfindung in Draufsicht. Wie aus Fig. 4 ersichtlich ist, weist die Gleitringdichtungsanordnung 1 drei Sensoren 6 auf, welche entlang des Umfangs des stationären Gleitrings 4 in Umfangsrichtung in gleichen Abständen voneinander angeordnet sind. Die drei Sensoren 6 können dabei die gleichen physikalischen Werte erfassen oder bevorzugt auch unterschiedliche physikalische Werte erfassen. Beispielsweise können die drei Sensoren die Temperatur, einen Schwingungsweg des stationären Gleitrings 4 und den am stationären Gleitring 4 auftretenden Körperschall erfassen. Es sei angemerkt, dass selbstverständlich noch weitere Sensoren am stationären Gleitring 4 und/oder am rotierenden Gleitring 3 angeordnet werden können.

Wie aus den beschriebenen Ausführungsbeispielen somit ersichtlich ist, können erfindungsgemäß Daten und/oder Energie kabellos von und zu Gleitringen 3, 4 einer Gleitringdichtung 2 übertragen werden. Hierdurch ist ein Einsatz von Sensoren 6 insbesondere bei Medien mit schwierigen Umfeldbedingungen, beispielsweise hohen Temperaturen über 200°C und/oder hohen Drücken und/oder bei sehr aggressiven Medien möglich. Die Sensoren 6 können beispielsweise als Dünnschicht-Sensoren ausgebildet sein. Dadurch weisen sie wenig Gewicht auf und können an verschiedensten Positionen der Gleitringdichtung 2 angeordnet werden. Besonders bevorzugt erfolgt dabei eine Anordnung der Sensoren in einem produktabgewandten Bereich an der Gleitringdichtung 2. Weiter bevorzugt sind direkt an den Sensoren jeweils Auswertungseinheiten 8 angeordnet, so dass die zu übertragenden Datenmengen signifikant reduziert werden können.

### Bezugszeichenliste

- 1: Gleitringdichtungsanordnung
- 2: Gleitring
- 3: rotierender Gleitring
- 4: stationärer Gleitring
- 5: Dichtspalt
- 6, 6`: Sensor
- 7: kabellose Übertragungsvorrichtung
- 8, 8': Auswertungseinheit
- 9: Sensoraufnahmeelement
- 10: Steuereinheit
- 11: Produktbereich
- 12: Atmosphärenbereich
- 13: Gleitringträger
- 14: Vorspannelement
- 15: Gehäuse
- 16: Wellenhülse
- 17: Welle
- 18: Ausnehmung
- 41: Rückseite des stationären Gleitrings
- 71, 71': erste Sender-Empfänger-Vorrichtung
- 72: zweite Sender-Empfänger-Vorrichtung
- X-X: Mittelachse der Welle 17

## Patentansprüche

1. Gleitringdichtungsanordnung, umfassend:
- wenigstens eine Gleitringdichtung (2) mit einem rotierenden Gleitring (3) und einem stationären Gleitring (4), welche zwischen sich einen Dichtspalt (5) definieren, und
- wenigstens einen Sensor (6) zur Erfassung wenigstens eines physikalischen Wertes, wobei der Sensor (6) an einem der Gleitringe oder einem mit dem Gleitring verbundenen Bauteil, angeordnet ist, und
- eine kabellose Übertragungsvorrichtung (7) mit einer ersten Sender-Empfänger-Vorrichtung (71), die am Sensor (6) angeordnet ist und einer zweiten Sender-Empfänger-Vorrichtung (72), die an einem stationären Bauteil angeordnet ist, wobei eine Übertragung von Daten und elektrischer Energie durch Induktion an den Sensor zwischen der ersten und zweiten Sender-Empfänger-Vorrichtung (71, 72) kabellos erfolgt, und
- eine Auswertungseinheit (8), **dadurch gekennzeichnet, dass** die Auswertungseinheit direkt am Sensor (6) angeordnet ist, eingerichtet zur Reduktion von zu übertragenden Datenmengen,
- wobei an einem der Gleitringe mehrere Sensoren (6) angeordnet sind, und
- wobei die physikalischen Werte, die die Sensoren aufnehmen, ein Körperschall des rotierenden Gleitrings (3) und/oder des stationären Gleitrings (4) ist und eine Spalthöhe des Dichtspalts zwischen dem rotierenden und dem stationären Gleitring ist.

2. Gleitringdichtungsanordnung nach einem der vorhergehenden Ansprüche, wobei der Sensor (6) ein Dünnschicht-Sensor ist.

3. Gleitringdichtungsanordnung nach einem der vorhergehenden Ansprüche, wobei der Sensor (6) an einem produktabgewandten Bereich der Gleitringdichtung angeordnet ist.

4. Gleitringdichtungsanordnung nach einem der vorhergehenden Ansprüche, wobei der Sensor (6) in einem mit dem Gleitring verbundenen Sensoraufnahmeelement (9) angeordnet ist, wobei das Sensoraufnahmeelement (9) ein O-Ring ist oder eine Nebendichtung der Gleitringdichtung ist oder ein Gleitringträger (13) ist.

5. Gleitringdichtungsanordnung nach einem der vorhergehenden Ansprüche, wobei die physikalischen Werte, die der Sensor aufnimmt, ferner ausgewählt sind aus:
- einer Temperatur des rotierenden Gleitrings und/oder des stationären Gleitrings und/oder eines sich im Dichtspalt (5) befindlichen Fluids, und/oder
- einer Beschleunigung des rotierenden Gleitrings (3) und/oder des stationären Gleitrings (2) in Axialrichtung und/oder Radialrichtung und/oder in Umfangsrichtung, und/oder
- einer Oberflächenwellenausbreitung am rotierenden Gleitring (3) und/oder am stationären Gleitring (4), und/oder
- einer positiven und/oder negativen Dehnung des rotierenden Gleitrings und/oder des stationären Gleitrings.

6. Gleitringdichtungsanordnung nach einem der vorhergehenden Ansprüche, wobei der Sensor (6) eine torodiale Form aufweist.

7. Gleitringdichtungsanordnung nach einem der vorhergehenden Ansprüche, ferner umfassend eine Steuereinheit (10), welche eingerichtet ist, basierend auf dem und/oder den erfassten physikalischen Werten eine Ausfallwahrscheinlichkeit der Gleitringdichtungsanordnung zu bestimmen.

## Claims

1. A mechanical seal arrangement, comprising:
- at least one sliding ring seal (2) with a rotating sliding ring (3) and a stationary sliding ring (4), which define a sealing gap (5) therebetween, and
- at least one sensor (6) for detecting at least one physical value, wherein the sensor (6) is arranged at one of the sliding rings or a component connected to the sliding ring, and
- a wireless transmission device (7) with a first transmitter-receiver device (71), which is arranged at the sensor (6), and a second transmitter-receiver device (72), which is arranged at a stationary component, wherein a transmission of data and electrical energy by induction to the sensor between the first and second transmitter-receiver devices (71, 72) is performed wirelessly, and
- an evaluation unit (8),
**characterised in that** the evaluation unit is arranged directly at the sensor (6) and is configured to reduce amounts of data to be transmitted,
- wherein multiple sensors (6) are arranged at one of the sliding rings, and
- wherein the physical values, which the sensors record, is a structure-borne sound of the rotating sliding ring (3) and/or of the stationary sliding ring (4) and is a gap height of the sealing gap between the rotating and the stationary sliding ring.

2. The mechanical seal arrangement according to any of the preceding claims, wherein the sensor (6) is a thin-film sensor.

3. The mechanical seal arrangement according to any of the preceding claims, wherein the sensor (6) is arranged at a region of the sliding ring seal facing away from product.

4. The mechanical seal arrangement according to any of the preceding claims, wherein the sensor (6) is arranged in a sensor receiving element (9) connected to the sliding ring, wherein the sensor receiving element (9) is an O-ring or is a secondary seal of the sliding ring seal or is a sliding ring carrier (13).

5. The mechanical seal arrangement according to any of the preceding claims, wherein the physical values, which the sensors record, are further selected from:
- a temperature of the rotating sealing ring and/or the stationary sealing ring and/or a fluid located in the sealing gap (5), and/or
- an acceleration of the rotating sealing ring (3) and/or the stationary sealing ring (2) in axial direction and/or radial direction and/or in circumferential direction, and/or
- a surface wave propagation at the rotating sliding ring (3) and/or at the stationary sliding ring (4), and/or
- a positive and/or negative expansion of the rotating sliding ring and/or the stationary sliding ring.

6. The mechanical seal arrangement according to any of the preceding claims, wherein the sensor (6) comprises a toroidal shape.

7. The mechanical seal arrangement according to any of the preceding claims, further comprising a control unit (10), which is configured to determine a failure probability of the mechanical seal arrangement based on the detected physical value and/or the detected physical values.

## Revendications

1. Ensemble joint d'étanchéité à anneau glissant comprenant :
- au moins un joint d'étanchéité à anneau glissant (2) avec un anneau glissant (3) rotatif et un anneau glissant (4) stationnaire qui définissent entre eux une fente étanche (5) et
- au moins un capteur (6) pour la détection d'au moins une valeur physique, dans lequel le capteur (6) est agencé au niveau d'un des anneaux glissants ou d'un composant relié à l'anneau glissant, et
- un dispositif de transmission (7) sans câble avec un premier dispositif émetteur-récepteur (71) qui est agencé au niveau du capteur (6) et un second dispositif émetteur-récepteur (72) qui est agencé au niveau d'un composant stationnaire, dans lequel une transmission de données et d'énergie électrique est effectuée sans câble par induction au niveau du capteur entre le premier et le second dispositif émetteur-récepteur (71, 72) et
- une unité d'évaluation (8), **caractérisé en ce que** l'unité d'évaluation est agencée directement au niveau du capteur (6), conçue pour la réduction de quantités de données à transmettre,
- dans lequel plusieurs capteurs (6) sont agencés au niveau d'un des anneaux glissants et
- dans lequel les valeurs physiques qu'enregistrent les capteurs, sont un bruit de structure de l'anneau glissant (3) rotatif et/ou de l'anneau glissant (4) stationnaire et sont une hauteur de la fente d'étanchéité entre l'anneau glissant rotatif et l'anneau glissant stationnaire.

2. Ensemble joint d'étanchéité à anneau glissant selon l'une quelconque des revendications précédentes, dans lequel le capteur (6) est un capteur à couche mince.

3. Ensemble joint d'étanchéité à anneau glissant selon l'une quelconque des revendications précédentes, dans lequel le capteur (6) est agencé au niveau d'une zone éloignée du produit du joint d'étanchéité à anneau glissant.

4. Ensemble joint d'étanchéité à anneau glissant selon l'une quelconque des revendications précédentes, dans lequel le capteur (6) est agencé dans un élément de logement de capteur (9) relié à l'anneau glissant, dans lequel l'élément de logement de capteur (9) est un joint torique ou est un joint d'étanchéité secondaire du joint d'étanchéité à anneau glissant ou est un support d'anneau glissant (13).

5. Ensemble joint d'étanchéité à anneau glissant selon l'une quelconque des revendications précédentes, dans lequel les valeurs physiques qu'enregistre le capteur, sont de plus sélectionnées parmi :
- une température de l'anneau glissant rotatif et/ou de l'anneau glissant stationnaire et/ou d'un fluide se trouvant dans la fente d'étanchéité (5) et/ou
- une accélération de l'anneau glissant (3) rotatif et/ou de l'anneau glissant (2) stationnaire dans le sens axial et/ou le sens radial et/ou le sens périphérique et/ou
- une propagation d'ondes de surface au niveau de l'anneau glissant (3) rotatif et/ou au niveau de l'anneau glissant (4) stationnaire et/ou
- un allongement positif et/ou négatif de l'anneau glissant rotatif et/ou de l'anneau glissant stationnaire.

6. Ensemble joint d'étanchéité à anneau glissant selon l'une quelconque des revendications précédentes, dans lequel le capteur (6) présente une forme toroïdale.

7. Ensemble joint d'étanchéité à anneau glissant selon l'une quelconque des revendications précédentes, comprenant de plus une unité de commande (10) qui est conçue afin de déterminer une probabilité de défaillance de l'ensemble joint d'étanchéité à anneau glissant sur la base de la et/ou des valeurs physiques détectées.
